(19) Europäisches Patentamt
European Patent Office
Office européen des brevets

(11) **EP 4 465 479 A2**

(12) **EUROPEAN PATENT APPLICATION**

(43) Date of publication:
**20.11.2024 Bulletin 2024/47**

(51) International Patent Classification (IPC):
***H02J 7/00*** *(2006.01)*

(21) Application number: **24176522.1**

(22) Date of filing: **17.05.2024**

(52) Cooperative Patent Classification (CPC):
**H02J 7/00034; H02J 7/0013;** H02J 2207/30;
H02J 2310/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.05.2023 BE 202305411**

(71) Applicant: **Niko NV
9100 Sint-Niklaas (BE)**

(72) Inventor: **DE BRABANDER, Peter
9100 Nieuwkerken-Waas (BE)**

(74) Representative: **Winger
Mouterij 16 bus 101
3190 Boortmeerbeek (BE)**

(54) **POWER NETWORK MANAGEMENT SYSTEM**

(57) A power network management system for managing a power delivery distribution architecture, comprising a plurality of electric or electronic sockets (4) of a same electric circuit, each electric or electronic socket (4) having an input module (11) for receiving power from a power supply (1), and an output module (10) for receiving a plug for charging and/or powering an electric or electronic device, wherein the power network management system comprises, individually associated with each of at least two of the plurality of electric or electronic sockets (4) of the same electric circuit, a microcontroller (8) and a power delivery management module (6) for dynamically allocating power to the output module (10) of its associated electric or electronic socket (4) based at least on power requirements of a connected electric or electronic device to be charged and/or powered, by setting up a communication protocol for controlling the plurality of electric or electronic sockets (4) by dividing power from the power supply over the plurality of electric or electronic sockets (4), and a communication module (7) for directly, without involvement of a master device, communicating the communication protocol to the electric or electronic sockets (2) of the same electric circuit.

FIG. 1

## Description

### Field of the invention

The present invention relates to the field of power management systems, specifically to systems for managing power distribution across multiple electric or electronic sockets within a network.

### Background of the invention

In the realm of electrical power distribution, particularly within environments such as homes, offices, and other venues, the efficient management of power among multiple devices remains a critical challenge. As the number of devices that require electrical power increases, so does the complexity of managing this power distribution effectively. Traditional power distribution systems often involve simple circuit designs that do not account for varying power needs of different devices, leading to inefficiencies and potential overloads.

One of the primary issues in current power distribution systems is the static nature of power delivery. Power outlets typically provide a fixed amount of power, regardless of the actual demand from the devices connected to them. This can lead to situations where some devices receive more power than needed, while others may not receive enough, resulting in inefficient power usage and increased energy costs.

Moreover, the rise of electronic devices that require different voltages and currents has added another layer of complexity to power management. Devices such as smartphones, laptops, and tablets often have specific charging requirements that differ significantly from one another. The inability of traditional power outlets to adjust these parameters dynamically can lead to suboptimal charging times and even damage to electronic devices due to inappropriate power supply.

Another significant issue is the physical wiring and infrastructure required for traditional power distribution systems. Extensive wiring can be costly and inflexible, limiting the adaptability of power systems to changing layouts and increasing the difficulty of upgrades or reconfigurations. Additionally, the more extensive the wiring, the greater the power loss that occurs due to resistance in the wires, which can be substantial over long distances.

Despite advancements in technology that have begun to address some of these issues, such as the development of smart outlets and advanced power strips, there remains a substantial need for further innovation in the field of power management systems. These systems must not only efficiently manage the distribution of power based on the dynamic requirements of connected devices but also minimize infrastructure costs and adapt to various environments without extensive modifications.

### Summary of the invention

It is an object of embodiments of the present invention to provide a power network management system for optimizing power delivery from a power supply for charging and/or powering a plurality of electric or electronic devices and thereby minimize cable losses as much as possible. This objective is accomplished by a power network management system for managing a power delivery distribution architecture according to the invention.

In a first aspect, the present invention relates to a power network management system for managing a power delivery distribution architecture, comprising a plurality of electric or electronic sockets of a same electric circuit, each electric or electronic socket having an input module for receiving power from a power supply, and an output module for receiving a plug for charging and/or powering an electric or electronic device. The power network management system comprises, individually associated with each of at least two of the plurality of electric or electronic sockets of the same electric circuit,

- a microcontroller and a power delivery management module for dynamically allocating power to the output module of its associated electric or electronic socket based at least on power requirements of a connected electric or electronic device to be charged and/or powered, by setting up a communication protocol for controlling the plurality of electric or electronic sockets by dividing power from the power supply over the plurality of electric or electronic sockets, and
- a communication module for directly, without involvement of a master device, communicating the communication protocol to the electric or electronic sockets of the same electric circuit.

In embodiments, the power delivery management module may be configured to prioritize power allocation to the output module of its associated electric or electronic socket based on a predefined priority level of each electric or electronic device connected to one of the electric or electronic sockets. This allows optimizing power delivery based on device importance.

In embodiments, the system may further comprise a user interface for receiving preference settings from a user for adjusting the pre-defined priority level of an electric or electronic device connected to one of the electric or electronic sockets. This enables customizing priorities to user needs.

In embodiments, the user interface may comprise at least one of a physical button, a touchscreen display, or a voice recognition module. These provide intuitive input options.

In embodiments, the user interface may comprise a selection menu for setting one or more of the following:

- priority order of one or more electric or electronic devices to be charged and/or powered,
- target time for indicating when one or more electric or electronic devices need to be fully charged,
- allocation of a dedicated electric or electronic socket to one electric or electronic device to make sure that this electric or electronic device is powered at all times,
- maximum available power from the power supply, and
- maximum allowable power for a particular connected electric or electronic device to be charged and/or powered.

This allows fine-grained control over power management.

In embodiments, the power delivery management module may comprise means for instantly managing power supply that becomes available to optimize power supply to the electric or electronic devices. This enables dynamic reallocation of freed-up power.

In embodiments, the communication module may comprise:

- means to let the electric or electronic sockets in the same electric circuit communicate amongst each other, and
- means for communicating with an app on a mobile device.

This allows peer-to-peer socket communication and remote monitoring.

In embodiments, the communication module may utilize at least one wireless communication protocol selected from the group comprising Bluetooth, Wi-Fi, Zigbee, and NFC. These are common wireless standards.

In embodiments, the communication module may be configured for communicating the communication protocol via a network, or via point-to-point communication (e.g. WiFi direct, Zigbee Direct, BLE). This provides flexibility in communication architecture.

In embodiments, the communication module may be further configured to encrypt communications between the electric or electronic sockets to enhance security. This protects against unauthorized access.

In embodiments, the power network management system may be configured for managing a power delivery distribution architecture comprising between 2 and 8 electric or electronic sockets. This is a practical range for many applications.

In a second aspect, the present invention relates to a method for managing power delivery in a network, the method comprising:

- receiving power at a plurality of electric or electronic sockets from a power supply,
- dynamically allocating power to each electric or electronic socket based at least on power requirements of devices connected to the sockets, and
- communicating directly, without involvement of a master device, between the electric or electronic sockets to implement a protocol that controls power distribution among the sockets.

In embodiments, dynamically allocating power may include adjusting the power allocation in real-time based on changes in the power requirements of connected devices. This enables responsive adaptation to varying loads.

In embodiments, the real-time adjustments may be made based on data received from sensors monitoring the power consumption of the connected devices. This provides accurate input for power reallocation decisions.

In embodiments, the communication between the electric or electronic sockets may be performed using a decentralized communication protocol that does not require a central controller or a master controller. This improves robustness by avoiding a single point of failure.

In embodiments, the method may further include a step of configuring each electric or electronic socket using a configuration tool accessible via a mobile device. This allows convenient remote setup.

In embodiments, the configuration tool may provide options for setting maximum system power available, sharing settings among devices, and allocating specific power levels to particular devices. This enables customizing the power management behavior.

In embodiments, the method may further include maintaining a suitable minimum power supply, for instance of 15 Watt (e.g.5V/3A, 9V/1.67A, ...) to each electric or electronic socket regardless of other power requirements in the network. This ensures a baseline power availability. If the load supports a higher voltage, then cables losses can be reduced by using the higher voltage and a lower current to obtain a same power delivery. In embodiments, maintaining the minimum power supply may include overriding other power allocation settings if necessary to ensure compliance with the minimum power requirement. This prioritizes the minimum power guarantee.

It is an advantage of embodiments of the present invention that efficient power distribution can be achieved across multiple devices connected to a network of electric or electronic sockets, ensuring optimal energy use and reducing waste. It is a further advantage of embodiments of the present invention that power can be dynamically allocated based on the specific requirements of each connected device, which allows for adaptive power management responsive to real-time demands. It is another advantage of embodiments of the present invention that direct communication between sockets can be facilitated without the need for a central master device, promoting a more robust and decentralized network architecture. Additionally, it is an advantage of embodiments of the present invention that user preferences can be directly inputted to customize power delivery priorities, schedules, and limits, enhancing user control and satisfaction. It is yet another advantage of embodiments of the present invention that various types of sockets, including USB and smart sockets, can be incorporated within the system, providing versatility and broad compatibility with numerous device types. Furthermore, it is an advantage of embodiments of the present invention that the system can include a user interface that allows for easy interaction and configuration according to user-specific needs, including setting priority orders and dedicated power allocations. It is also an advantage of embodiments of the present invention that communication protocols can be established to manage and optimize power distribution effectively, potentially integrating with mobile devices for remote monitoring and control. Finally, it is an advantage of embodiments of the present invention that the system can support a range of input voltages and adjust these to suitable levels for device charging and operation, ensuring safety and efficiency.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

## Brief description of the drawings

The invention will now be described further, by way of example, with reference to the accompanying drawings, in which:

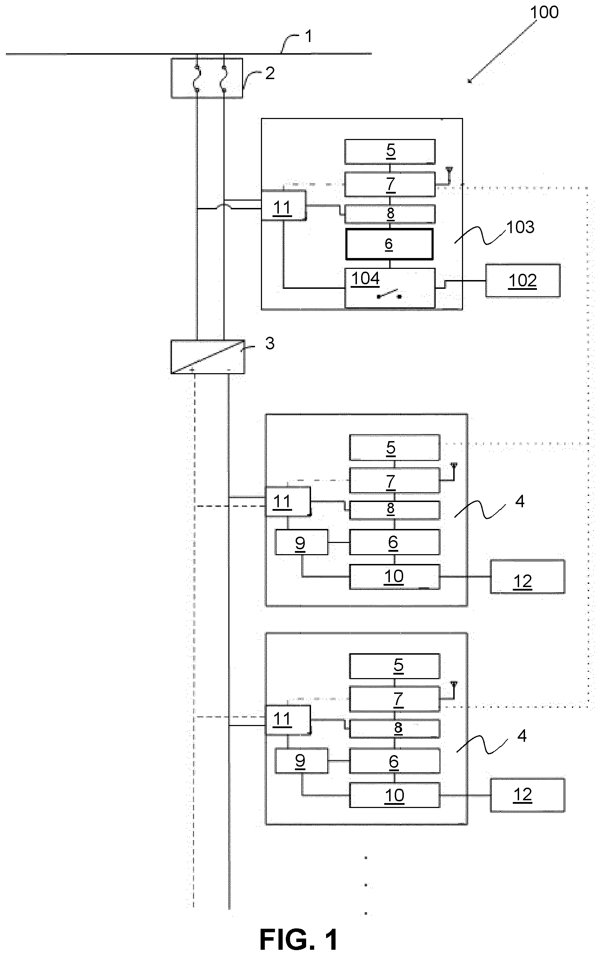

FIG. 1 is a schematic view of a power delivery distribution architecture which comprises a plurality of electric or electronic sockets, of which some (one in the embodiment illustrated) deliver AC current, and some (two in the embodiment illustrated) deliver a low voltage DC current, and which can be controlled by a power network management system according to embodiments of the present invention.

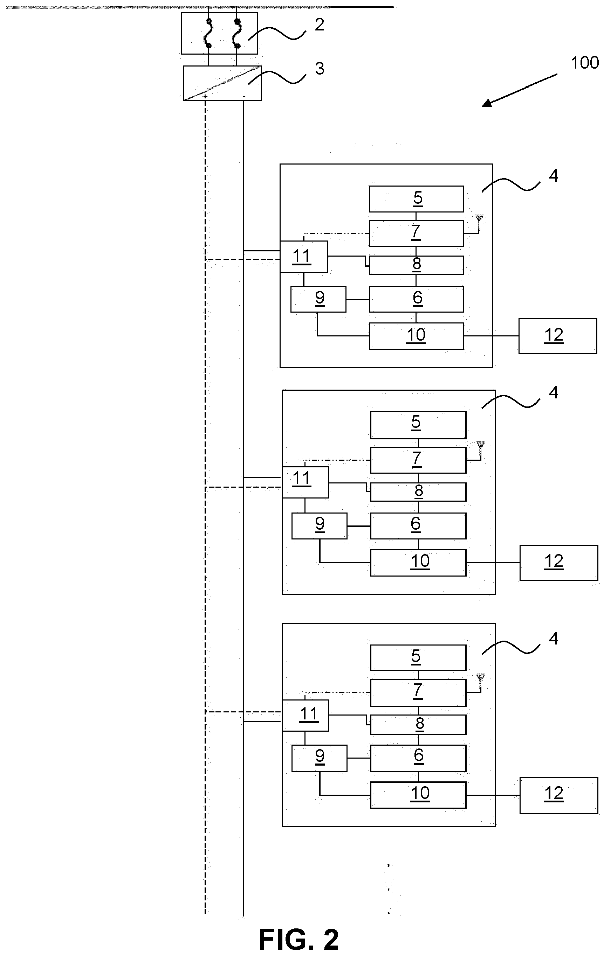

FIG. 2 is a schematic view of a power delivery distribution architecture which comprises a plurality of low voltage DC electric or electronic sockets, which can be controlled by a power network management system according to embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

In the different drawings, the same reference signs refer to the same or analogous elements. Any reference signs in the claims shall not be construed as limiting the scope.

## Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of the same embodiment, wherein the term "comprising" is replaced by "consisting of, is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "electric or electronic socket" refers to a receptacle or outlet designed to receive a plug and provide an electrical connection for powering or charging devices, including but not limited to wall outlets, power strips, charging stations, and smart outlets with built-in power management capabilities.

As used herein, and unless otherwise specified, the term "power delivery management module" refers to a component, either hardware or software-based, responsible, in cooperation with a microcontroller, for dynamically controlling and allocating power to the associated electric or electronic socket based on factors such as the power requirements of the connected device, user-defined priorities, and available power from the power supply. Examples of a power delivery management module include, but are not limited to, a microcontroller with power management firmware, a dedicated power management integrated circuit, or a software module running on a smart outlet's processor.

As used herein, and unless otherwise specified, the term "communication module" refers to a component, either hardware or software-based, that enables direct communication between electric or electronic sockets within the same electric circuit to coordinate power distribution without relying on a central master device. Examples of a communication module include, but are not limited to, a wireless transceiver (e.g., Bluetooth, Wi-Fi, Zigbee, or NFC) or a wired communication interface (e.g., powerline communication, Ethernet, or a proprietary wired protocol).

As used herein, and unless otherwise specified, the term "user interface" refers to any means by which a user can interact with the power network management system to input preferences, settings, or commands. Examples of a user interface include, but are not limited to, physical buttons, touchscreen displays, voice recognition modules, mobile apps, or web-based interfaces.

As used herein, and unless otherwise specified, the term "power requirements" refers to the electrical power needed by a connected device to operate or charge properly, which may include factors such as voltage, current, wattage, and duration. Power requirements can be determined based on information provided by the connected device, user input, or real-time monitoring of the device's power consumption.

As used herein, and unless otherwise specified, the term "decentralized communication protocol" refers to a method of communication between electric or electronic sockets that does not rely on a central controller or master device to coordinate the exchange of information or power distribution decisions. Examples of decentralized communication protocols include, but are not limited to, peer-to-peer protocols, mesh network protocols, or distributed consensus algorithms.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

As schematically illustrated in FIG. 1, in the first aspect, the present invention relates to a power network management system for managing a power delivery distribution architecture (100) comprising a plurality of electric or electronic sockets (4, 103) of a same electric circuit. In embodiments, the plurality of electric or electronic sockets (4) may beUSB sockets, USB-A sockets, USB-C sockets, USB-C power delivery devices, smart sockets, AC sockets having a relay, or a combination thereof. In the embodiment illustrated in FIG. 1, only three sockets (4) are represented, of which one is an AC socket having a relay, receiving an AC voltage and delivering AC current, and two others are low voltage DC sockets, receiving DC voltage and delivering DC current. In the embodiment illustrated in FIG. 2, also three sockets (4) are represented, all three low voltage DC sockets, receiving DC voltage and delivering DC current to a connected load (12).

Each electric or electronic socket (4, 103) has an input module (11) for receiving power from a power supply (1), and an output module (10, 104) for receiving a plug for charging and/or powering an electric or electronic device (12, 102).

The power network management system comprises, individually associated with each of at least two of the plurality of electric or electronic sockets (4) of the same electric circuit, - a microcontroller (8) and a power delivery management module (6) for dynamically allocating power to the output module (10) of its associated electric or electronic socket (4) based at least on power requirements of a connected electric or electronic device (12) to be charged and/or powered, by setting up a communication protocol for controlling the plurality of electric or electronic sockets (4) by dividing power from the power supply (1) over the plurality of electric or electronic sockets (4), and

- a communication module (7) for directly, without involvement of a master device, communicating the communication protocol to the electric or electronic sockets (4) of the same electric circuit.

The communication protocol can comprise commands regarding priority settings, target times, allocation of dedicated electric or electronic sockets to a fixed electric or electronic device, maximum available power from the power supply, maximum allowable power for a particular electric or electronic device, and much more.

In embodiments, the communication module (7) may utilize at least one communication protocol, e.g. at least one wireless communication protocol selected from the group consisting of Bluetooth, Wi-Fi, Zigbee, and NFC. In a particular implementation, for instance two communication protocols may be on board: e.g. priority setting using mobile phone could be done via a first protocol such as WiFi, while the devices among each other may communicate via a second protocol such as Zigbee.

In embodiments, the communication module (7) may be configured for communicating the communication protocol via a network, or via point-to-point communication. In embodiments, the communication module (7) may be further configured to encrypt communications between the electric or electronic sockets (4) to enhance security.

In embodiments, the power delivery management module (6) may be configured to prioritize power allocation to the output module (10) of its associated electric or electronic socket (4) based on a predefined priority level of each electric or electronic device connected to one of the electric or electronic sockets (4).

In embodiments of the present invention, the communication device (7), the power delivery management module (6) and the microcontroller (8) can be implemented as distinct components. In alternative embodiments, two or all three of these components can be implemented in a single unit then providing two or all three of the functions..

The microcontroller (8) and/orthe power delivery management module (6) may incorporate machine learning algorithms to analyze user behavior and power consumption patterns over time. By learning from this data, the system can predict future power requirements and automatically adjust power allocation to optimize energy efficiency and minimize cable losses. For example, if a user consistently charges a particular device at a specific time each day, the system can anticipate this and allocate power accordingly, even before the device is connected.

This management system enables the electric or electronic sockets (4) to dynamically allocate power based on device requirements and user preferences, and to communicate with each other to optimize the power distribution, all without needing a centralized master controller. The modular setup with a power delivery management module (6) and communication module (7) for each socket provides flexibility and scalability.

The power network management system also includes, associated with each electric or electronic socket (4), a user interface (5) for receiving input preferences and settings from a user. The user interface (5) communicates with the power delivery management module (6) for transmitting the user input thereto, and controlling the functioning of the electric or electronic socket (4) correspondingly, and with the communication module (7) associated with the electric or electronic socket (4), for transmitting the communication protocol including the user input preferences and settings to other electric or electronic sockets (4) of the same electric circuit. In embodiments, this user interface (5) may be configured for receiving preference settings from a user for adjusting a pre-defined priority level of an electric or electronic device (12) connected to one of the electric or electronic sockets (4). In embodiments, the user interface (5) may comprise at least one of a physical button, a touchscreen display, or a voice recognition module.

In embodiments, the user interface (5) may comprise a selection menu for setting one or more of the following:

- priority order of one or more electric or electronic devices to be charged and/or powered,
- target time for indicating when one or more electric or electronic devices need to be fully charged,
- allocation of a dedicated electric or electronic socket (4) to one electric or electronic device to make sure that this electric or electronic device is powered at all times,
- maximum available power from the power supply (1), and
- maximum allowable power for a particular connected electric or electronic device (12) to be charged and/or powered.

The selection menu in the user interface (5) may allow users to set advanced preferences, such as specifying exact power levels for each connected device (12), setting time intervals for charging or powering devices, and creating custom device profiles with pre-defined settings for easy management. This allows fine-grained control over power management. Hence, with a power network management system according to embodiments of the invention, the user can manage the charging and/or powering of electric or electronic devices (12) within the home. For example, when electric or electronic devices are to be charged during the night, and only need to be fully charged in the morning, a user can indicate so and the power network management system will manage the charging of that electric or electronic device such that that electric or electronic device will be fully charged in the morning and not earlier. In that way, the available power is managed to make sure that all devices are charged and/or powered as indicated by the user, but also to minimize losses in the electrical network.

Indeed, during charging and/or powering, losses occur in the electrical cable. The higher the provided power, the higher these cable losses will be. According to embodiments of the present invention, the user may provide a timing when he/she needs the electric or electronic device(s) (12) and/or which of the electric or electronic devices (12) has priority. Based thereon, the power network management system according to embodiments of the present invention may determines the optimum charging time and/or charging power. This is illustrated by the following calculation example, in the exemplary case of a USB-C power delivery device.

$$48V*5A*1h => \text{cable losses}: 1ohm \times 5^2*1h = 25Wh$$

$$48V*2.5A*2h => \text{cable losses}: 1ohm *2.5^2 *2h = 12.50Wh$$

As can be seen from this example, in the second situation, 2,5A has been provided over 2 hours instead of, in the first situation, 5A over 1 hour. The end result is the same, in that the device in both situations has received 240 W. However, the second situation halves the cable losses and thus optimizes the use of the power provided by the power supply (1).

The microcontroller (8) comprises means for receiving and managing the input from the user via the user interface (5) and setting up a communication protocol for controlling the electric or electronic devices (12) accordingly. In the microcontroller (8), the preference settings of the user are analyzed and a communication protocol is set up comprising commands on how the power from the power supply (1) will be divided over the electric or electronic sockets (4) for charging and/or powering the electric or electronic devices (12) connected to those electric or electronic sockets (4) in order to optimize power delivery/energy use for charging and/or powering all electric or electronic devices (12) and minimize cable losses, thereby taking into account the preferences settings of the user.

The microcontroller (8) facilitates the communication between the different devices and their power delivery management module (6) e.g. via RF-communication. The microcontroller (8) gets to know via the communication device (7) that is communicating with other electric or electronic sockets (4) how much power is available, e.g. only 40W is available, and communicates this to the power delivery management module (6). So the microcontroller (8) tells the power delivery management module (6) how much power it has available for the load (12). X

In the embodiments illustrated in FIG. 1 and FIG. 2, the power delivery management module (6) of the low power electric or electronic devices (4) does the negotiation/communication with the load (12), for instance it request what the load (12) wants (e.g. does the load want 5V/2A?) and/or what the load (12) can handle (e.g. can the load handle 9V/1A?). When the load (12) and the power delivery management module (6) finish their negotiation, the microcontroller (8) gets to know how much power will be really taken by the load (12) and thus how much is left. This info can then be communicated to the other power delivery devices (4).

In embodiments including besides low power electric or electronic sockets (4) also AC sockets (103), like the embodiment illustrated in FIG. 1, the AC electric or electronic socket (103) may be configured to measure the power used by the connected load (102), and transfer this info by the power delivery management module (6), the microcontroller (8) and the communication module (7) to the other electric or electronic devices (4, 103) in the architecture (100). The AC sockets (103) automatically get the highest priority, as these devices cannot negotiate with the connected load (102).

A user can thus provide his or her preference settings to the power network management system, but does not have to manage the control of power delivery to the different electric or electronic sockets (4) him- or herself. For example, a user can provide a priority ordering in which he or she wants to have electric or electronic devices charged and/or powered. The power delivery management module (6) will, from this input, make a communication protocol with commands in order to control the electric or electronic sockets (4) accordingly, and the electric or electronic device (12) with highest priority will first be provided with full power. The other devices will get a command to adapt to this situation, and will get less or no power at that moment.

In embodiments, the microcontroller (8) and the power delivery management module (6) may comprise means for instantly managing power supply that becomes available, to optimize power supply to the connected electric or electronic devices (12). This enables dynamic reallocation of freed-up power. For example, for an electric or electronic socket (4) that powers a TV, the user needs to indicate via the user interface (5) that the TV needs to be provided with power at all times. This means that, if the TV is in the off modus, the power that is normally used to power the TV is at that time available for other electric or electronic devices (12). However, when the TV is put in the on modus, the power needs to be available immediately. This will then be at the expense of other electric or electronic devices (12). At that time, the input, e.g. priority or timing input, from the user will be taken into account for determining which of the electric or electronic devices (12) gets priority to be ready first or to be ready at the time required by the user.

According to embodiments of the invention and as illustrated in FIG. 1 and FIG. 2, the power delivery management module (6) may be a separate module. Alternatively, not illustrated, the power delivery management module (6) may, also according to other embodiments, be part of the communication module (7).

In embodiments, the power network management system may be configured for managing a power delivery distribution architecture comprising between 2 and 8 electric or electronic sockets (4). This is a practical range for many applications.

In the case of one or more of the plurality of electric or electronic sockets (4) being low voltage power delivery devices, e.g. USB such as USB-C power delivery devices, the power delivery distribution architecture (100) may further comprise a low voltage power supply (3) for providing a low voltage output signal, and a protective device (2) such as a fuse coupled between an AC or DC electrical network (1) and the low voltage power supply (3). The low voltage power supply (3) may be adapted for bringing an input of the power supply (1), for instance an input of between 90 VAC and 264 VAC or an equivalent DC voltage of between 90 VDC and 400 VDC to an output of lower than 60VDC, for instance between 20 VDC and 60 VDC. This enables compatibility with standard power grids.

In the second aspect, the present invention relates to a method for managing power delivery in a network, the method comprising:

- receiving power at a plurality of electric or electronic sockets (4) from a power supply (1, 3),
- dynamically allocating power to each electric or electronic socket (4) based at least on power requirements of devices (12) connected to the sockets (4), and
- communicating directly, without involvement of a master device, between the electric or electronic sockets (4) to implement a protocol that controls power distribution among the sockets (4).

In embodiments, dynamically allocating power may include adjusting the power allocation in real-time based on changes in the power requirements of connected devices (12). This enables responsive adaptation to varying loads. For example, if a high-priority device is disconnected, the newly available power may immediately be redistributed to other connected devices according to their priority levels and user preferences.

In embodiments, the real-time adjustments may be made based on data received from sensors monitoring the power consumption of the connected devices (12). This provides accurate input for power reallocation decisions.

In embodiments, the real-time adjustments may be made based on user input, such as priority and/or preference settings. During operation, the sockets (4) may be controlled in a priority order and/or within a time frame according to the user's input. Power may be divided among the connected devices (12) to optimize power delivery, maximize energy use efficiency, and minimize cable losses in the electrical cables. The microcontroller (8) receives and manages the user input to control the sockets (4), adapting the power delivery via the power delivery management module (6) when the user changes his or her preferences.

The power network management system may incorporate load balancing functionality to evenly distribute power among the connected devices (12) while considering their individual power requirements and user-defined priorities. If a socket (4) or connected device (12) malfunctions, the system may automatically detect the issue and may redistribute the available power to the remaining functional sockets (4) and devices (12), ensuring continuous operation and minimizing the impact of the faulty component.

In embodiments, the communication between the electric or electronic sockets (4) may be performed using a decentralized communication protocol that does not require a central controller or a master controller. This improves robustness by avoiding a single point of failure. The communication module (7) enables communication between itself and the other components of its socket (4), as well as among the sockets (4).

The communication module (7) may also communicate with an external tool, e.g. a mobile app to provide users with information about the charging and/or powering status of the connected devices (12). This way, the communication module (7) of the power network management system may enable remote monitoring and control of the connected devices (12) through a mobile app or web interface. Users can access real-time information about the power consumption, charging status, and estimated time to full charge for each connected device (12). They can also remotely adjust priority levels, set charging schedules, and turn sockets on or off, providing convenient control over the power network from anywhere.

In embodiments, the method may further include a step of configuring each electric or electronic socket (4) using a configuration tool, for instance a configuration tool accessible via a mobile device. In embodiments, the configuration tool may provide options for setting maximum system power available, sharing settings among devices (12), and allocating specific power levels to particular devices (12). This allows convenient remote setup and enables customizing the power management behavior.

In embodiments, the method may further include maintaining a minimum power supply of, for instance, 15 Watt (e.g. 5V/3A, 9V/1.67A, ...) to each electric or electronic socket (4) regardless of other power requirements in the network. This ensures a baseline power availability and prioritizes the minimum power guarantee. If the load supports a higher voltage, then cables losses can be reduced by using the higher voltage and a lower current to obtain a same power delivery. In embodiments, maintaining the minimum power supply may include overriding other power allocation settings if necessary to ensure compliance with the minimum power requirement. This prioritizes the minimum power guarantee.

In embodiments, the method may further include maintaining a suitable minimum power supply, for instance of 15 Watt (e.g.5V/3A, 9V/1.67A, ...) to each electric or electronic socket regardless of other power requirements in the network. This ensures a baseline power availability.

The system optimizes power use and minimizes cable losses by intelligently managing the charging and/or powering of connected devices based on user preferences and real-time power availability. This innovative approach to power network management demonstrates the potential for significant improvements in energy efficiency and user convenience.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

**Claims**

1.  A power network management system for managing a power delivery distribution architecture, comprising a plurality of electric or electronic sockets (4, 103) of a same electric circuit, each electric or electronic socket (4, 103) having an input module (11) for receiving power from a power supply (1), and an output module (10, 104) for receiving a plug for charging and/or powering an electric or electronic device (12, 102),
wherein the power network management system comprises, individually associated with each of at least two of the plurality of electric or electronic sockets (4, 103) of the same electric circuit,

- a microcontroller (8) and a power delivery management module (6) for dynamically allocating power to the output module (10) of its associated electric or electronic socket (4) based at least on power requirements of a connected electric or electronic device to be charged and/or powered, by setting up a communication protocol for controlling the plurality of electric or electronic sockets (4) by dividing power from the power supply over the plurality of electric or electronic sockets (4), and
- a communication module (7) for directly, without involvement of a master device, communicating the communication protocol to the electric or electronic sockets (2) of the same electric circuit.

2. The power network management system in accordance with claim 1, wherein the power delivery management module (6) is configured to prioritize power allocation to the output module (10) of its associated electric or electronic socket (4) based on a predefined priority level of each electric or electronic device connected to one of the electric or electronic sockets (4).

3. The power network management system in accordance with claim 2, further comprising a user interface (5) for receiving preference settings from a user for adjusting the pre-defined priority level of an electric or electronic device connected to one of the electric or electronic sockets (4).

4. The power network management system according to claim 3, wherein the user interface (5) comprises at least one of a physical button, a touchscreen display, or a voice recognition module.

5. The power network management system according to any or claims 3 or 4, wherein the user interface (5) comprises a selection menu for setting one or more of the following:

- priority order of one or more electric or electronic devices to be charged and/or powered,
- target time for indicating when one or more electric or electronic devices need to be fully charged,
- allocation of a dedicated electric or electronic socket (2) to one electric or electronic device to make sure that this electric or electronic device is powered at all times,
- maximum available power from the power supply, and
- maximum allowable power for a particular connected electric or electronic device to be charged and/or powered.

6. The power network management system according to any of the previous claims, wherein the power delivery management module (6) comprises means for instantly managing power supply that becomes available to optimize power supply to the electric or electronic devices.

7. The power network management system according to any of the previous claims, wherein the communication module (7) comprises:

- means to let the electric or electronic sockets (4) in the same electric circuit communicate amongst each other, and
- means for communicating with an app on a mobile device.

8. A method for managing power delivery in a network, the method comprising:

- receiving power at a plurality of electric or electronic sockets (4) from a power supply,
- dynamically allocating power to each electric or electronic socket (4) based at least on power requirements of devices connected to the sockets, and
- communicating directly, without involvement of a master device, between the electric or electronic sockets (4) to implement a protocol that controls power distribution among the sockets (4).

9. The method according to claim 8, wherein dynamically allocating power includes adjusting the power allocation in real-time based on changes in the power requirements of connected devices.

10. The method according to claim 9, wherein the real-time adjustments are made based on data received from sensors monitoring the power consumption of the connected devices.

**11.** The method according to any one of claims 8 to 10, wherein the communication between the electric or electronic sockets (4) is performed using a decentralized communication protocol that does not require a central controller or a master controller.

**12.** The method according to any one of claims 8 to 11, wherein the method further includes a step of configuring each electric or electronic socket (4) using a configuration tool accessible via a mobile device.

**13.** The method according to claim 12, wherein the configuration tool provides options for setting maximum system power available, sharing settings among devices, and allocating specific power levels to particular devices.

**14.** The method according to any one of claims 8 to 13, wherein the method further includes maintaining a minimum power supply to each electric or electronic socket (4) regardless of other power requirements in the network.

**15.** The method according to claim 13, wherein maintaining the minimum power supply includes overriding other power allocation settings if necessary to ensure compliance with the minimum power requirement.

**FIG. 1**

**FIG. 2**